# EUROPÄISCHE PATENTANMELDUNG

(11) **EP 2 518 217 A1**
(43) Veröffentlichungstag der Anmeldung: **31.10.2012**
(21) Anmeldenummer: 11163917.5
(22) Anmeldetag: 27.04.2011
(51) Int. Cl.: E02F 5/10, E02F 3/20, E02F 3/18, E02F 5/02

(54) **Grabenfräse**

(71) Anmelder: Stehr, Jürgen, 36318 Schwalmtal (DE)
(72) Erfinder: Stehr, Jürgen, 36318 Schwalmtal (DE)
(74) Vertreter: WSL Patentanwälte Partnerschaftsgesellschaft

(57) **Zusammenfassung**

Die vorliegende Erfindung betrifft eine Grabenfräse mit einem rotierenden Fräsrad 81) zur Herstellung von Gräben in der Breite des Fräsrades und mit einem Antriebsfahrzeug (30), wobei das Fräsrad (1) eine eine Rotationsachse (15) definierende, zentrale Nabe (2) und einen mit der Nabe (2) verbundenen Radkranz (3) aufweist, der über seine Breite hinweg und entlang seines Umfanges verteilt Fräselemente (4) aufweist, wobei die Nabe (4) innerhalb der Breite des Fräsrades liegt. Um eine konkrete Lösung anzugeben, wie eine Lagerung eines Fräsrades möglich ist, so dass das Fräsrad über die Nabe hinaus in den von dem Radkranz des Fräsrades gefrästen Graben eintauchen kann, wird erfindungsgemäß vorgeschlagen, dass die Nabe (4) durch mindestens einen Gabelschenkel (6) gehalten wird, welcher die Nabe (2) drehbar lagert und sich von der Nabe (2) ausgehend in radialer Richtung auf ein Niveau oberhalb der Nabe (2) und innerhalb des Fräsradprofiles (P) zum Radkranz (3) hin erstreckt und vor Erreichen des Radkranzes (3) in axialer Richtung nach außen über das Fräsradprofil (P) hinaus verschwenkt und radial an dem Radkranz (3) vorbeigeführt und mit der Halterung des Antriebsfahrzeuges verbindbar ist.

## Beschreibung

Die vorliegende Erfindung betrifft eine Grabenfräse mit einem rotierenden Fräsrad zur Herstellung von Gräben in der Breite des Fräsrades und mit einem Antriebsfahrzeug, wobei das Fräsrad eine Rotationsachse-definierende, zentrale Nabe und einen mit der Nabe verbundenen Radkranz aufweist, der über seine Breite hinweg und entlang seines Umfanges verteilt Fräselemente aufweist, wobei die Nabe mit ihrer Lagerung innerhalb der Breite des Fräsrades liegt.

Ein entsprechendes Fräsrad ist aus dem deutschen Gebrauchsmuster 202010002066 desselben Anmelders bekannt.

Eine weitere Grabenfräse ist aus der DE 10105475C1 bekannt.

Bei dieser ragt allerdings die Lagerung über das Profil des Fräsrades hinaus.

In der DE 202010002066 wird zwar beschrieben, dass die Lagerung des Fräsrades nicht über deren Profil hinausragen soll und das Fräsrad demzufolge tiefer in einen Graben eintauchbar sein soll, allerdings werden keine konkreten Mittel beschrieben, mit welchen dieses erreicht werden kann. Es ist beispielsweise möglich, dass das Fräsrad indirekt über ein Antriebsritzel am Radkranz oder eine Radkranzführung aufgehängt ist.

Eine Lagerung des Fräsrades in der Weise, dass die Lagerung nicht über das Profil des Fräsrades hinausragt, hat den Vorteil, dass das Fräsrad mit seiner Nabe in den gefrästen Graben eintauchen kann, nachdem durch die am Radkranz angeordneten Fräselemente der Graben bis zu einer entsprechenden Tiefe ausgefräst worden ist. Auf diese Weise kann man bei einer gegebenen Grabentiefe einen kleineren Durchmesser eines Fräsrades wählen, als dies bei einer Fräse gemäß DE 10105475C1 möglich wäre.

Die Verwendung von Fräsrädern mit kleinerem Durchmesser hat wiederum den Vorteil, dass man eine kleinere Antriebsleistung verwenden kann.

Entsprechend kleinere Fräsen lassen sich auch leichter und problemloser an gängigen Antriebsfahrzeugen, wie z.B. einem Traktor, einem Radlader oder dgl., der eine entsprechende hydraulische Aufhängung sowie eine Antriebswelle aufweist, anbringen.

Gegenüber dem oben genannten Stand der Technik liegt der vorliegenden Erfindung die Aufgabe zugrunde, eine konkrete Lösung anzugeben, wie eine Lagerung eines Fräsrades möglich ist, so dass das Fräsrad über die Nabe hinaus in den von dem Radkranz des Fräsrades gefrästen Graben eintauchen kann.

Diese Aufgabe wird dadurch gelöst, dass die Nabe durch mindestens einen Gabelschenkel gehalten wird, welcher die Nabe lagert und sich von der Nabe ausgehend in radialer Richtung auf ein Niveau oberhalb der Nabe, jedoch innerhalb des Fräsradprofiles zum Radkranz hin erstreckt und vor Erreichen des Radkranzes in axialer Richtung nach außen über das Fräsradprofil hinaus verschwenkt und radial an dem Radkranz vorbei geführt ist und mit einer Halterung des Antriebsfahrzeuges verbindbar ist.

Da der Gabelschenkel sich innerhalb des Fräsradprofiles nach oben erstreckt, kann er innerhalb dieses Bereiches noch mit der Nabe in den Graben eingetaucht werden, und zwar bis zu einer Tiefe, welche der Höhe des aus dem Fräsradprofil heraus verschwenkten Abschnittes des Gabelschenkels entspricht. Zweckmäßigerweise erstreckt sich dabei der Gabelschenkel von der Nabe aus gesehen innerhalb eines Kreissektors, der bezüglich einer Vertikalen maximal einen Bereich von ± 60° umfasst. Besonders bevorzugt ist es, wenn sich der Gabelschenkel von der Nabe aus im Wesentlichen vertikal nach oben erstreckt. Dies ermöglicht bei einer gegebenen Gabelform, die sich innerhalb des Fräsradprofils so nah wie möglich an den Radkranz heran erstreckt und erst unmittelbar vor Erreichen des Radkranzes, um eine Berührung desselben mit dem Gabelschenkel zu vermeiden, axial nach außen verschwenkt, eine maximale Eintauchtiefe des Fräsrades in den Graben.

In einer weiteren bevorzugten Ausführungsform ist vorgesehen, dass auf beiden Seiten des Fräsrades je ein solcher Gabelschenkel vorgesehen ist, wobei jeder der Gabelschenkel einen der beiden gegenüber liegenden Abschnitte einer Nabe lagert und sich von der Nabe aus beiderseits des Fräsrads in radialer Richtung auf ein Niveau oberhalb der Nabe in Richtung des Radkranzes und innerhalb des Fräsradprofils erstreckt und vor Erreichen des Radkranzes in entgegen gesetzten Richtungen nach außen abbiegtund anschließend radial an dem Radkranz vorbei erstrecken kann, wobei die Gabelschenkel radial außerhalb des Fräsrades und vorzugsweise ganz oder überwiegend oberhalb desselben mit der Halterung des Antriebsfahrzeuges verbunden sind. Zweckmäßigerweise sind die beiden Gabelschenkel zumindest weitgehend zueinander symmetrisch ausgebildet, wobei dies nicht zwingend, und zumindest nicht bezüglich aller Details der Gabelschenkel erforderlich oder möglich ist.

Weiterhin ist eine Ausführungsform der Erfindung bevorzugt, bei welchem der mindestens eine Gabelschenkel aus einem flachen Blechmaterial besteht und sich sektorförmig von der Rotationsachse aus zu der oberhalb von der Nabe und auch vorzugsweise oberhalb des Radkranzes angeordneten Halterung des Antriebsfahrzeuges erstreckt. Mit einem entsprechend sektorförmigen, flachen Blechmaterial kann man sehr leicht die Bedingung einhalten, dass sich der Gabelschenkel innerhalb des Fräsradprofiles erstreckt, wobei das Blechmaterial ggf. Sicken oder andere Verstärkungselemente aufweisen kann, die eine Versteifung und Verstärkung bewirken. Der Sektor, den ein solcher aus Blech gefertigter Gabelschenkel umfasst, kann z.B. bis zu 120°, vorzugsweise doch weniger als 90° betragen, zumindest sollte derjenige Teil der Gabel, der kurz vor Erreichen des Radkranzes axial nach außen verschwenkt und über das Fräsradprofil hinausragt, sich von einer Vertikalen aus gesehen, nicht über einen wesentlich größeren Bereich als ± 60°, vorzugsweise nicht mehr als ± 45°, erstrecken, um nicht durch den axial nach außen abknickenden und sich teilweise entlang des Umfangs erstreckenden Abschnitt des Schenkels die Eintauchtiefe der Fräse unnötig zu begrenzen.

Die beiden Gabelschenkel können insbesondere so miteinander verbunden sein, dass sie die Oberseite des Radkranzes abdecken, und sie können insbesondere auch einstückig mit dieser Abdeckung ausgebildet sein.

Weiterhin ist in einem Bereich oberhalb der Nabe ein Getriebe radial innerhalb des Radkranzes und innerhalb des Radkranzprofils vorgesehen, welches den Radkranz und damit das Fräsrad insgesamt von der Innenseite her drehend antreibt. Hierzu kann das Getriebe ein entsprechendes Zahnrad aufweisen, und der Radkranz des Fräsrades kann mit entsprechenden Elementen versehen sein, in welche ein Zahnrad eingreifen kann.

In einer Ausführungsform können dies einfach im Abstand achsparallel und unmittelbar innerhalb des Radkranzes angeordnete Bolzen sein, in deren Zwischenräume die Zähne eines Antriebsrades eingreifen können und den Radkranz über die Bolzen antreiben.

Ebensogut könnte der Radkranz der Grabenfräse auch mit einer entsprechenden Innenverzahnung versehen sein.

Zweckmäßigerweise ist das Getriebe auch an dem mindestens einen bzw. an mindestens einem der beiden Gabelschenkel befestigt und gelagert.

Der mindestens eine Gabelschenkel bzw. das Paar von Gabelschenkeln oder deren Halterung sollte in einer bevorzugten Ausführungsform mindestens um eine Achse, vorzugsweise um mindestens zwei oder drei Achsen bezüglich des Antriebsfahrzeuges verschwenkbar sein. Die üblichen Dreipunkthalterungen an Traktoren, an denen beispielsweise auch andere landwirtschaftliche Anbaugeräte, wie z.B. Pflüge und dergleichen befestigt werden, sind bereits um mindestens zwei Achsen bezüglich des Antriebsfahrzeuges verschwenkbar, so dass durch Verschwenken um eine im Wesentlichen parallel zur Rotationsachse des Fräsrades verlaufende Achse eine Verschwenkung des Fräsrades nach oben und unten, um die außerhalb des Fräsrades liegende Schwenkachse möglich ist, wobei eine weitere Verschwenkung um eine Achse möglich ist, die parallel zu einem horizontalen Durchmesser des Fräsrades verläuft und die damit ein Verkippen des Fräsrades ermöglicht, so dass hierdurch ein Graben mit geneigten Wänden gefräst werden kann, und schließlich kann auch eine Schwenkachse vorgesehen sein, welche parallel zu einem vertikalen Durchmesser des Fräsrades verläuft, was es erleichtert, das Fräsrad entlang eines Bogens zu führen, um einen gekrümmt verlaufenden Graben herzustellen.

Wie bereits erwähnt, sollte die Grabenfräse in der bevorzugten Ausführungsform als Anbaugerät für Traktoren, Radlader, Bagger oder dgl. ausgebildet sein, die eine übliche Dreipunkthalterung und mit hydraulischer Betätigung und eine drehbare Antriebswelle aufweisen, die mit dem entsprechenden Getriebe verbunden werden kann. Zweckmäßigerweise wird auch die Antriebswelle deutlich oberhalb des Niveaus der Nabe in einem oberen Abschnitt des Radkranzes an dem Radkranz vorbeigeführt und mit dem Getriebe, das sich ebenfalls im oberen Bereich des Radkranzes befindet, verbunden.

Zusätzlich kann an der Halterung des Fräsrades, vorzugsweise wiederum an der Gabel bzw. dem Gabelpaar ein Planierschild angeordnet sein, welches den Boden neben einem erzeugten Graben planiert.

Darüber hinaus kann auch noch ein Verdichtungsgerät mit statischem oder dynamischem Antrieb an der Grabenfräse bzw. an dem Antriebsfahrzeug für die Grabenfräse angeordnet sein. Weiterhin kann in Arbeitsrichtung dem Fräsrad folgend an der Grabenfräse noch eine Einbaurichtung für Rohre, Leitungen, Folien oder Deichplatten oder dgl. vorgesehen sein. Damit lassen sich entsprechende Rohre oder Leitungen unmittelbar während der Herstellung des Grabens in diesem verlegen, oder der Graben wird entsprechend ausgekleidet.

Weitere Vorteile, Merkmale und Anwendungsmöglichkeiten der vorliegenden Erfindung werden deutlich anhand der vorliegenden Beschreibung einer bevorzugten Ausführungsform und der dazu gehörigen Figuren. Es zeigen:
Figur 1 eine Seitenansicht auf eine erfindungsgemäße Grabenfräse,
Figur 2 eine stirnseitige Ansicht (a) und eine Schnittansicht (b) durch ein Fräsrad,
Figur 3 eine Seitenansicht der Grabenfräse ohne die Darstellung der erfindungsgemäßen Lagerung,
Figur 4 eine Seitenansicht der an einem Traktor angebauten Grabenfräse wiederum ohne die Darstellung der erfindungsgemäßen Aufhängung der Grabenfräse, und
Figur 5 Einen der am Radkranz vorgesehenen Antriebsbolzen und dessen Befestigung in einer Seitenansicht und eine teilweisen Schnittansicht.

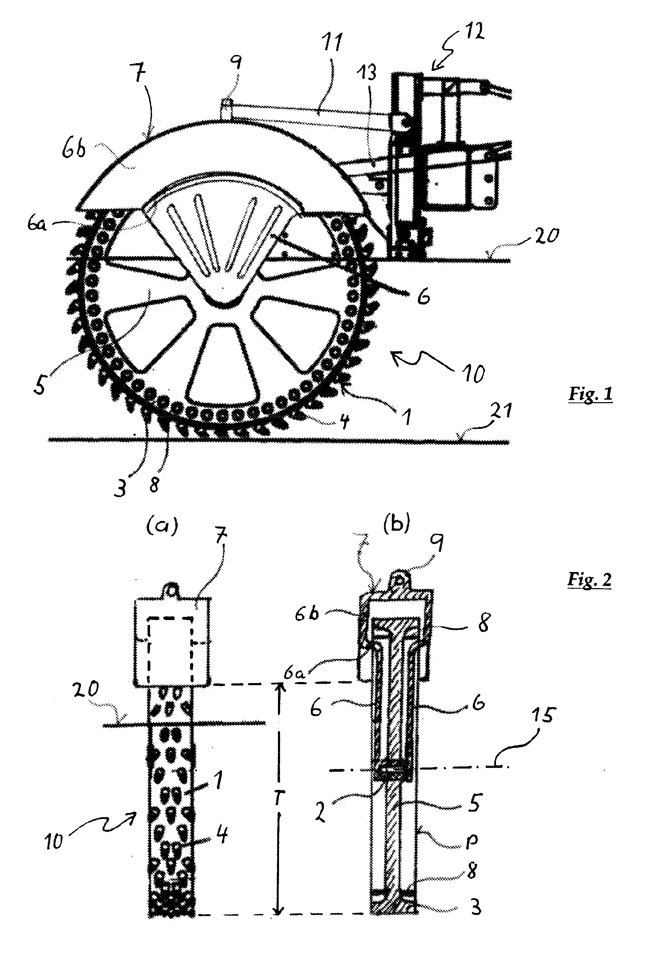

Die Erfindung wird jetzt zunächst anhand der Figuren 1 und 2 beschrieben.

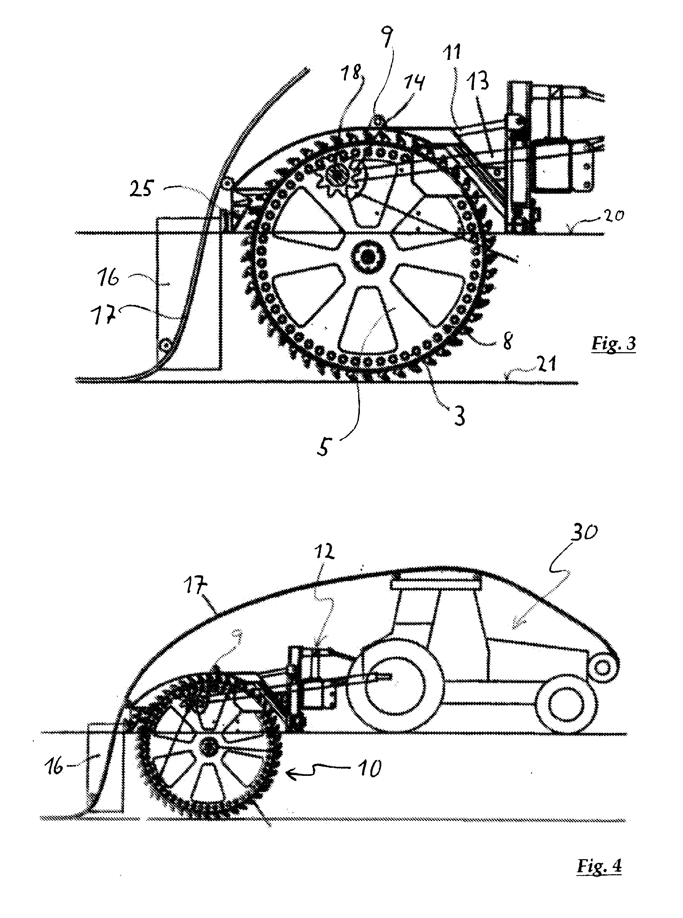

Man erkennt in Figur 1 eine Seitenansicht einer Grabenfräse 10, die über eine herkömmliche Dreipunktaufhängung 12 einschließlich einer hydraulischen Hubstange 11 an einem Traktor oder ähnlichem Gerät aufgehängt ist. Eine Antriebswelle 13 erstreckt sich zu einem nicht dargestellten Getriebe, welches später im Zusammenhang mit Figur 3 noch beschrieben wird.

Die Grabenfräse 10 besteht im Wesentlichen aus einem Fräsrad 1, das eine Nabe 2, einen Radkranz 3 und Nabe 2 und Radkranz 3 verbindende Speichen 5 aufweist. Der Radkranz 3 ist auf seinem Außenumfang mit Schneidpicken 4 bestückt.

Die Nabe 2 ist um eine Achse 15 drehbar an zwei Gabelschenkeln 6 aufgehängt, die sich neben den Speichen 5 von der Nabe 2 ausgehend in radialer Richtung im Wesentlichen nach oben und zunächst innerhalb des Profils P des Fräsrades 1 erstrecken, wobei dieses Profil P durch die axiale Erstreckung des Radkranzes 3 und die darauf montierten Schneidpicken 4 definiert wird. Kurz vor Erreichen des Radkranzes bzw. der zu dem Radkranz gehörenden Antriebsbolzen 8 biegen die beiden Gabelschenkel 6 in axialer Richtung ab und erstrecken sich erst in diesem oberen Bereich über das Profil P des Fräsrades 1 hinaus und verlaufen dann weiter über zwei sich wieder radial erstreckende Schenkel 6b an dem Radkranz 3 vorbei und sind über einen entsprechenden horizontalen Schenkel miteinander verbunden, durch die zusammen mit den Abschnitten 6b eine Abdeckung 7 definiert ist. Über die schematisch dargestellte Aufhängung 9 sind die Abdeckung 7 und die Gabelschenkel 6 mit einer Halterung des Antriebsfahrzeuges 30 (siehe Figur 4), konkret indirekt oder direkt mit der Dreipunktaufhängung 12, verbunden. Neben der in Figur 1 schematisch dargestellten Hubstange 11 können die Aufhängung 7 bzw. die Gabelschenkel 6 auch mit weiteren hydraulischen Hubstangen verbunden sein, um das Fräsrad über eine entsprechende Steuerung der Dreipunktaufhängung 12 beliebig ausrichten, anheben und absenken zu können.

Die beiden Gabelschenkel 6 erstrecken sich, wie man in Figur 1 erkennt, sektorförmig nach oben und sind bspw. aus Blechen mit Verstärkungssicken hergestellt. Die im Profil von Figur 2 (b) erkennbaren Abschnitte 6b der Gabelschenkel 6 erstrecken sich in Umfangsrichtung über einen etwas noch größeren Sektor als die innerhalb des Fräsradprofiles P verlaufenden Abschnitte der Gabelschenkel 6 und bieten so Schutz gegen Boden und Gesteinsmaterial, welches von dem rotierenden Fräsrad mitgenommen und aufgewirbelt wird.

Durch eine horizontale Linie 20 wird schematisch das Niveau eines Bodens angedeutet, in welchen ein Graben einzufräsen ist, dessen Grund wiederum durch die Linie 21 wiedergegeben ist. Die maximale Eintauchtiefe T des Fräsrades ist in Figur 2 dargestellt und entspricht dem Abstand einer horizontalen Tangente an den unten liegenden Abschnitt des Fräsrades bis zu dem unteren Rand der Abdeckung 7 bzw. den sich axial erstreckenden Abschnitten 6a der Gabelschenkel 6, die, wie man in Figur 1 erkennt, an ihrer tiefsten Stelle auch mit dem unteren Rand der Abdeckung 7 zusammen treffen.

In den Figuren 3 und 4 ist die Grabenfräse nochmals ohne die Gabeln 6 und die Abedeckung dargestellt, wobei zusätzlich aber ein Planierschild 25 und eine Kabel- oder Rohrverlegeeinrichtung 16 dargestellt sind. Auch hier erkennt man, dass das Fräsrad über seine Nabe hinaus unter das Bodenniveau 20 abgesenkt ist und einen Graben fräsen kann, der bis zu seinem Grund 21 eine Tiefe T hat, die größer ist als der Radius des Fräsrades.

In Figur 4 erkennt man, dass die Dreipunktaufhängung 12 an einem Traktor 30 angeordnet ist, der gleichzeitig über eine Antriebswelle 13 auch die Grabenfräse 10 bzw. deren Fräsrad 1 drehend antreibt. Die Antriebswelle 13 und deren Verbindung zu einem Getriebe, das im Wesentlichen aus einem auf einer Nabe 18 gelagerten Zahnrad 14 besteht, sind in Figur 3 am besten zu erkennen. Für den Antrieb durch das Zahnrad 14 sind im Abstand unmittelbar radial innerhalb des Radkranzes 3 Bolzen 8 vorgesehen, die nicht nur mittig an dem Radkranz bzw. den Speichen, sondern auch an einem nicht dargestellten, sich vor dem axial äußeren Ende des Radkranzes 3 radial nach innen erstreckenden Flanschrand befestigt sein können. Auch das Zahnrad 14 liegt somit noch innerhalb des Profiles P des Fräsrades 1, auch wenn dies nicht zwingend erforderlich ist, da sich die Antriebswelle 13 ohnehin an dem Radkranz 3 vorbei erstrecken muss und das aus dem Zahnrad 14 und der Nabe 18 bestehende Getriebe sich ohnehin in der Nähe des oberen Zenits des Fräsrades befindet und sich i.a. nicht über den unteren Rand der Abedeckung 7 bzw. der Abschnitte 6a erstreckt, welche die Eintauchtiefe T des Fräsrades 1 definieren. Die sektorförmige Gabel 6 auf der Seite des Getribes 14, 18 kann jedoch im Bereich dieses Getriebes eine axaile Ausbuchtung aufweisen, die über das Profil P des Fräsrades hinausragt, die aber vorzugsweise nicht nach unten über dien Rand der Abdeckung 7 hinausragt.

Wie man in Figur 4 erkennt, kann bspw. eine Kabeltrommel oder eine Trommel für eine flexible Rohrleitung 17 an der Frontseite eines Traktors 30 angeordnet sein und über das Dach des Traktors und die Grabfräse hinweg zu der Verlegevorrichtung 16 zugeführt werden, so dass beim Fräsen eines Grabens im Zugbetrieb unmittelbar hinter der Grabenfräse ein entsprechendes Kabel oder eine Rohrleitung 17 in einem Arbeitsgang verlegt werden können.

Die erfindungsgemäße Fräse hat den Vorteil, dass sie Gräben bis zu einer Tiefe T fräsen kann, die wesentlich größer als der Radius des Fräsrades ist und bspw. das 1,5-fache oder mehr des Radius' des Fräsrades betragen kann. Dabei haben die Gabeln 6, auch wenn sie bspw. nur aus relativ dünnem Blechmaterial hergestellt werden, aufgrund der sektorförmigen Ausbildung und der ggf. vorgesehenen Verstärkungssicken eine ausreichende Stabilität, um das Fräsrad auch in schwierigem Gelände zu halten und zu führen. Die Dreipunktaufhängung ermöglicht dabei nicht nur das Anheben und Absenken der Grabenfräse 10 relativ zu dem Traktor bzw. sonstigem Antriebsgerät 30, sondern auch ein Verschwenken um eine vertikale Achse, die in Richtung des Antriebsgerätes vor der Grabenfräse liegt, und das Fräsrad kann ggf. auch um eine horizontale, in den Figuren 1, 3 und 4 in der Papierebene liegende Achse, verschwenkt werden, wodurch ggf. auch ein Graben mit gegenüber der Vertikalen geneigten Seitenwänden hergestellt werden kann.

Aufgrund der großen Eintauchtiefe kann für einen vorgegebenen Zweck ein Fräsrad mit einem vergleichsweise kleinen Durchmesser verwendet werden, welches eine entsprechend geringere Antriebsleistung erfordert, ohne dass deshalb die Leistung der Grabenfräse gegenüber einem wesentlich größeren Modell, welches mit seiner Nabe nicht in den Graben eintauchen kann, abfällt.

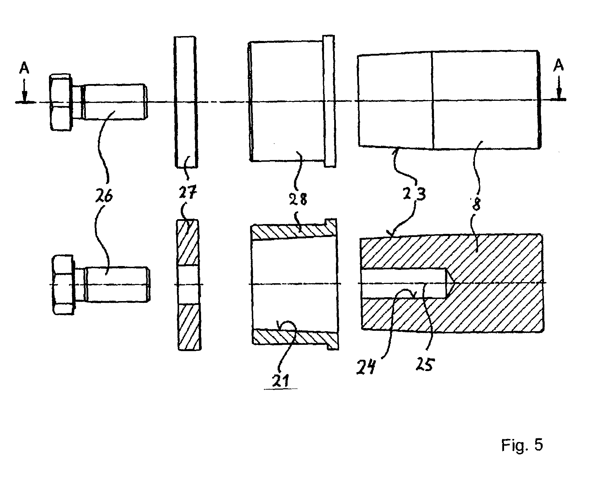

Figur 5 zeigt noch einen der Bolzen 8 und dessen Befestigung in einer Seitenansicht und teilweise im Schnitt.

Im oberen Teil der Figur 5 erkennt man in der Seitenansicht einen Bolzen 8, dessen eines Ende einen sich konisch zum Ende hin verjüngenden Abschnitt 23 aufweist, eine Hülse 28 mit einer entsprechenden konischen Innenfläche 21, eine Unterlegscheibe 27, die wahlweise auch durch den Flansch eines Radkranzes 14 gebildet sein kann und eine Befestigungsschraube 26.

Entlang des Umfangs des Radkranzes werden an einem radial einwärts ragenden Flansch die Antriebsbolzen 8 befestigt, die von dem Zahnrad bzw. Ritzel 14 erfasst werden, um den Radkranz und damit die Grabenfräse anzutreiben.

Die Bolzen haben entlang des Umfanges des Radkranzes einen Abstand, der in etwa dem Umfangsabstand der Zähne des Zahnrades 14 entspricht, wobei das profil der Zähne so gestaltet sind, dass sie möglichst reibungsarm in die Zwischenräume zwischen dem Bolzen 8 eingreifen und auf deren Oberfläche abrollen.

Die Bolzen 8 werden dabei mit Hilfe der Schraube 26, die in das Gewinde 24 der Bolzen eingreift, in die konische Hülse 28 hineingezogen, sodass sich die konische Außenfläche 23 der Bolzen mit der konischen Innenfläche der Hülse 21 verkeilt. Die Schraube 26 bzw. deren Kopf stützt sich dabei an einer Unterlegscheibe 27 ab, an deren Stelle gegebenenfalls aber auch ein Flansch des Radkranzes vorgesehen sein kann, der ansonsten aber auch Bohrungen aufweisen kann, um die Hülse 28 aufzunehmen, wobei der Radkranzflansch etwas breiter ist als die Hülse zwischen ihrem Endflansch 29 und dem anderen freien Ende lang ist. Auf diese Weise wird die Hülse 28 fest an dem (in Figur 5 nicht dargestellten) Flansch des Radkranzes befestigt. Gegebenenfalls kann die Außenoberfläche der Hülse 28 auch eine oder mehrere Abflachungen oder eine sonstige nicht rotationssymmetrische Ausgestaltung aufweisen, um drehfest in einer entsprechend angepassten Öffnung im Flansch des Radkranzes drehgesichert aufgenommen zu werden. Der Bolzen 8 kann hingegen, bevor er in der Hülse verkeilt wird, in einer beliebigen Winkelorientierung (bezüglich seiner eigenen Achse 25) verdreht werden. Dies ermöglicht es, dass nach einem längeren Gebrauch einer entsprechenden Grabenfräse und einem dadurch bedingtem einseitigen Verschleiß der Bolzen 8, die Bolzen 8 aus der Hülse 28 gelöst, um einen Winkel von zum Beispiel 90 oder 120° verdreht und erneut in der Hülse 28 festgezogen werden können, um auf diese Weise den Zähnen des Zahnrades 14 eine unverschlissene Angriffsfläche zu präsentieren.

Auch das Zahnrad 14 selbst ist symmetrisch bezüglich einer Drehung um eine Achse, die sich senkrecht zu der Zahnradachse erstreckt, was bedeutet, dass auch die Rückseite der Zähne des Antriebszahnrades 14 in gleicher Weise für den Antrieb genutzt werden kann, wie die Vorderseite. Auf diese Weise kann auch das Zahnrad 14 nach einseitigem Verschleiß der Zähne um 180° gedreht werden, um nunmehr die andere Seite der Zähne für den Antrieb und den Eingriff mit den Bolzen 8 zu verwenden.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

## Patentansprüche

1. Grabenfräse mit einem rotierenden Fräsrad 81) zur Herstellung von Gräben in der Breite des Fräsrades und mit einem Antriebsfahrzeug (30), wobei das Fräsrad (1) eine eine Rotationsachse (15) definierende, zentrale Nabe (2) und einen mit der Nabe (2) verbundenen Radkranz (3) aufweist, der über seine Breite hinweg und entlang seines Umfanges verteilt Fräselemente (4) aufweist, wobei die Nabe (4) innerhalb der Breite des Fräsrades liegt, **dadurch gekennzeichnet, dass** die Nabe (4) durch mindestens einen Gabelschenkel (6) gehalten wird, welcher die Nabe (2) drehbar lagert und sich von der Nabe (2) ausgehend in radialer Richtung auf ein Niveau oberhalb der Nabe (2) und innerhalb des Fräsradprofiles (P) zum Radkranz (3) hin erstreckt und vor Erreichen des Radkranzes (3) in axialer Richtung nach außen über das Fräsradprofil (P) hinaus verschwenkt und radial an dem Radkranz (3) vorbeigeführt und mit der Halterung des Antriebsfahrzeuges verbindbar ist.

2. Grabenfräse nach Anspruch 1, **dadurch gekennzeichnet, dass** auf beiden Seiten des Fräsrades (1) je ein Gabelschenkel (6) vorgesehen ist, wobei die Gabelschenkel (6) gegenüber liegende Abschnitte einer Nabe (2) lagern und sich beiderseits des Fräsrades (1) von der Nabe aus in radialer Richtung auf ein Niveau oberhalb der Nabe in Richtung des Radkranzes (3) und innerhalb Fräsradprofiles (P) erstrecken und vor Erreichen des Radkranzes (3) axial nach außen abbiegen und anschließend radial an dem Radkranz vorbei erstrecken, wobei die Gabelschenkel (6) radial außerhalb des Fräsrades mit der Halterung des Antriebsfahrzeuges verbunden sind.

3. Grabenfräse nach einem der vorstehenden Ansprüche, **dadurch gekennzeichnet, dass** der mindestens eine Gabelschenkel (6) aus einem flachen Blechmaterial besteht und sich sektorförmig von der Nabe (2) aus zu der oberhalb der Nabe, vorzugsweise oberhalb des Radkranzes (3), angeordneten Halterung erstreckt.

4. Grabenfräse nach einem der vorstehenden Ansprüche, **dadurch gekennzeichnet, dass** der mindestens eine Gabelschenkel mit einer die Oberseite des Radkranzes abdeckenden Abdeckung (7) vorzugsweise einstückig verbunden ist.

5. Grabenfräse nach einem der vorstehenden Ansprüche, **dadurch gekennzeichnet, dass** sie ein Getriebe zum Antrieb des Fräsrades radial innerhalb des Fräsradkranzes und oberhalb des Niveaus der Nabe aufweist.

6. Grabenfräse nach einem der vorstehenden Ansprüche, **dadurch gekennzeichnet, dass** das Getriebe an dem mindestens einen Gabelschenkel gelagert ist

7. Grabenfräse nach einem der vorstehenden Ansprüche, **dadurch gekennzeichnet, dass** das Getriebe einen Zahnantrieb aufweist und die Innenseite des Radkranzes eine entsprechende Verzahnung aufweist.

8. Grabenfräse nach einem der vorstehenden Ansprüche, **dadurch gekennzeichnet, dass** die Verzahnung durch sich näherungsweise achsparallel oder auf eine gedachten Konusfläche erstreckende, an der Innenseite des Radkranzes vorzugsweise auswechselbar befestigte Bolzen gebildet wird.

9. Grabenfräse nach Anspruch 8, **dadurch gekennzeichnet, dass** die Bolzen konische Endabschnitte aufweisen, die über entsprechende konische Hülsen an der Innenseite des Radkranzes in beliebiger Winkelposition bezüglich der Bolzenachse fixierbar sind.

10. Grabenfräse nach Anspruch 8, **dadurch gekennzeichnet, dass** der Zahnantrieb ein bezüglich einer 180°-Drehung senkrecht zur Zahnradachse symmetrisches Zahnrad aufweist.

11. Grabenfräse nach einem der vorstehenden Ansprüche, **dadurch gekennzeichnet, dass** der mindestens eine Gabelschenkel bzw. deren Halterung um mindestens eine, vorzugsweise um mindestens 2 oder 3 Achsen bezüglich des Antriebsfahrzeuges (30) verschwenkbar ist

12. Grabenfräse nach einem der vorstehenden Ansprüche, **dadurch gekennzeichnet, dass** sie als Anbaugerät für Traktoren, Radlager, Bagger oder dergleichen ausgebildet ist.

13. Grabenfräse nach einem der vorstehenden Ansprüche, **dadurch gekennzeichnet, dass** zusätzlich ein Planierschild an der als Anbaugerät ausgebildeten Grabenfräse (10) angeordnet ist,

14. Grabenfräse nach einem der vorstehenden Ansprüche, **dadurch gekennzeichnet, dass** zusätzlich ein Verdichtungsgerät mit statischem oder dynamischem Antrieb vorgesehen ist.

15. Grabenfräse nach einem der vorstehenden Ansprüche, **dadurch gekennzeichnet, dass** zusätzlich mindestens eine Einbauvorrichtung (16) für Rohre (17), Leitungen (17), Folien oder Deichplatten an dem Anbaugerät vorgesehen ist.
